# EUROPEAN PATENT APPLICATION

(11) **EP 0 825 353 A2**
(43) Date of publication of application: **25.02.1998**
(21) Application number: 97306051.0
(22) Date of filing: 08.08.1997
(51) Int. Cl.: F16B 19/10, H01R 4/26, H01R 4/06

(54) **Improved rivet assembly**

(30) Priority: 17.08.1996 GB 9617453
(71) Applicant: EMHART INC., Newark, Delaware 19711 (US)
(72) Inventor: Smith, Daniel Robin, Castle Bromwich, Birmingham B36 9BG (GB)
(74) Representative: Stagg, Diana Christine

(57) **Abstract**

The present invention relates to an improved blind rivet assembly for use in forming an electrical contact assembly. In many applications where an electrical contact may be desirable, it is usual for a primary workpiece in the form of a metal plate first to be painted. In such cases, it is necessary in some way to remove the paint, at least in a localised area, from the panel to enable an electrical connection to be made by the rivet assembly. In prior assemblies, an electrical contact member performing this function is formed separately from the rivet assembly, and must be joined thereto. In the present invention, we provide a rivet assembly comprising a rivet sleeve 1 and a pulling mandrel, in which the rivet sleeve comprises a substantially tubular body 2 with a flange 3 at one end, and the pulling mandrel comprises a mandrel head and a pulling stem, characterised in that the tubular body is provided adjacent the flange with at least one tang 14 to remove paint from the region of a hole in a metal workpiece and to dig into the metal to make an electrical connection.

## Description

The present invention relates to an improved blind rivet assembly, and in particular to an improved blind rivet assembly for use in forming an electrical contact assembly.

Blind rivets may be secured to a workpiece to which an operator has convenient access to one side only, known as the operator side of the assembly. The other side of the workpiece is known as the blind side.

Known blind rivet assemblies comprise a pulling mandrel and a rivet sleeve. The rivet sleeve comprises a substantially tubular body having a flange at one end. The pulling mandrel comprises a mandrel head from which extends a pulling stem. The pulling mandrel is located within the rivet sleeve, the pulling stem extending beyond the flange.

In use, the rivet sleeve is inserted in a hole in a primary workpiece, the flange abutting the workpiece. A setting tool causes the pulling mandrel to move relative to the flange, the mandrel head causing the tubular body of the rivet sleeve to deform or collapse on the blind side of the workpiece. The workpiece is thus secured between the flange and a deformed portion of the tubular body of the rivet sleeve. The mandrel may be formed with a breakneck portion near to the mandrel head. As a result, the mandrel will break upon completion of setting of the rivet.

A secondary workpiece may be secured by locating it between the primary workpiece and the rivet flange. It is known to form the secondary workpiece in the shape of a tag which is subsequently used as an electrical connection.

However, in many applications where an electrical contact may be desirable, it is usual for the primary workpiece in the form of a metal plate first to be painted. In such cases, it is necessary in some way to remove the paint, at least in a localised area, from the primary workpiece to enable an electrical connection to be made between the tag and the primary workpiece.

A solution to this problem is known from GB 2 017 426, in which a secondary component, an electrical contact member, is provided with prongs which bite into the metal in the region of a hole in a workpiece to ensure good electrical contact may be made between the contact member and the primary workpiece.

There are a number of problems with such a rivet assembly. In particular, the electrical contact member is formed separately from the rivet, and must be joined thereto. Further, during transit, there is a danger that the electrical contact member may work loose due to vibration. If the prongs are pushed into the rivet sleeve to secure the two parts against disassembly and ensure intimate contact with the rivet body, this may lessen the effectiveness of the prongs in removing paint from the metal panel and biting into the metal of the primary workpiece.

It is an advantage of the present invention that these problems are reduced or eliminated.

According to the present invention, a rivet assembly is provided comprising a rivet sleeve and a pulling mandrel, in which the rivet sleeve comprises a substantially tubular body with a flange at one end, and the pulling mandrel comprises a mandrel head and a pulling stem characterised in that the tubular body is provided adjacent the flange with at least one tang.

The tang acts to remove paint from a region of a hole in a metal workpiece and to dig into the metal to ensure an electrical connection is made. Since the rivet assembly comprises only two parts there is a reduced danger of the parts becoming separated due to vibration during transit.

The invention will now be described, by way of example only, with reference to the accompanying drawings, in which:
Figure 1 shows a perspective view of a rivet sleeve in accordance with the present invention;
Figure 2 shows a side view of a rivet sleeve of Figure 1; and
Figure 3 shows a view along line A-A of Figure 2.

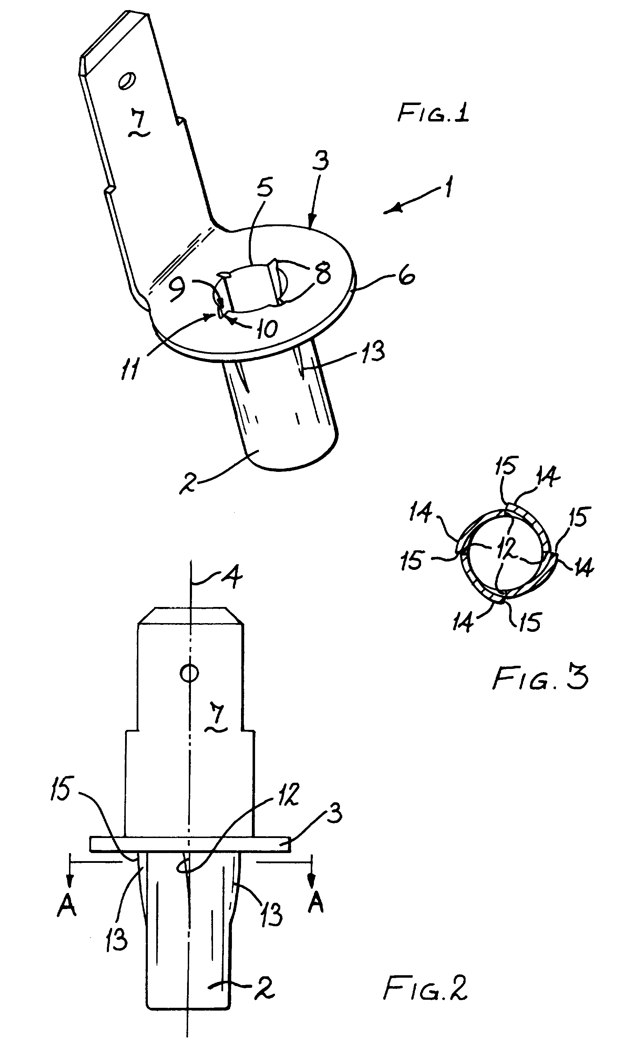

Referring to Figure 1, there is shown a rivet sleeve 1 according to the present invention. The rivet sleeve 1 comprises a substantially tubular body 2 with a flange 3 at one end. The tubular body 2 is of substantially uniform thickness, having a substantially constant internal diameter and a substantially constant external diameter. The rivet body has a longitudinal axis 4.

The flange is formed as a flattened annulus having an internal perimeter 5 and an external perimeter 6.

The flange 3 is formed with a single tag 7 in the embodiment shown. The tag 7 is formed as a radial extension of the flange 3 which has been bent away from the rivet body 2 near to the external perimeter of the flange. In the embodiment shown the tag 7 is aligned with the longitudinal axis of the rivet sleeve. The flange may be formed with more than one tag 7.

At the inside of the flange 3 at the point where the flange meets the rivet body a number of cut outs 8 have been made. Each cut out 8 has a first side 9 extending along a periphery of the inside of the flange, a second side 10 extending along a diameter of the flange and a third side 11 joining the other two (Figure 1). Between the first and second sides of the cut out, a cut 12 has been made along the rivet body 2. A portion 13 of the rivet body material is defined within an area defined by the first side 9 of the cut out, the length of the cut 12 and a line joining a base of the cut 12 to an opposite end of the first side 9 of the cut out from which the cut 12 extends. This portion is bent out along the line joining the cut 12 to the junction of the opposite end of the first side until an upper edge of the portion is adjacent the third side 11 of the cut out. In this way a number of tangs 14 each having a raised edge 15 are formed (Figure 3).

After assembly of the rivet body to a mandrel to form a rivet assembly, the rivet assembly may be inserted into a hole in a workpiece. As it does so the raised edges 15 of the tangs 14, formed as described above, dig into an edge of the hole in the workpiece. By virtue of their construction the tangs are flexible along the longitudinal axis 4 and, as the rivet is set, the mandrel progressively collapses the rivet body, causing it radially to expand on the blind side of the workpiece. This radial expansion causes the edges 15 of the tangs 15 further to become embedded into the workpiece.

## Claims

1. A rivet assembly comprising a rivet sleeve (1) and a pulling mandrel, in which the rivet sleeve (1) comprises a substantially tubular body (2) with a flange (3) at one end and the pulling mandrel comprises a mandrel head and a pulling stem characterised in that the tubular body (2) is provided adjacent the flange (3) with at least one tang (14).

2. A rivet assembly according to Claim 1 characterised in that the flange (3) is provided with at least one tag (7).

3. A rivet assembly according to claim 1 or claim 2 characterised in that the flange (3) is provided at the point where the flange (3) meets the rivet body (2) which at least one cut-out (8), the or each cut-out (8) being defined by a first side (9) extending along a periphery of the inside of the flange (3), a second side (10) extending along a diameter of the flange (3) and a third side (11) joining the first and second sides-and cut (12) has been made along the rivet body (2) at the point where the first and second sides (9,10) of the cut-out (8) meet, so that a portion (13) is defined within an area defined by the first side (9) of the cut out (8), the length of the cut (12) and a line joining a base of the cut (12) to an opposite end of the first side (9) of the cut out (8) from which the cut (12) extends, which portion (13) is bent out along the line joining the cut (12) to the junction of the opposite end of the first side (9) until an upper edge of the portion (13) is adjacent the third side (11) of the cut out (8), to form a tang (14) having a raised edge (15).
